Europäisches Patentamt

European Patent Office

Office européen des brevets

(11) Veröffentlichungsnummer: **0 128 227**
**A1**

(12) **EUROPÄISCHE PATENTANMELDUNG**

(21) Anmeldenummer: 83105555.3

(22) Anmeldetag: 06.06.83

(51) Int. Cl.³: **F 16 L 37/08**

(43) Veröffentlichungstag der Anmeldung: **19.12.84**
**Patentblatt 84/51**

(71) Anmelder: **Bell-Hermetic Armaturenwerke GmbH & Co.**
**KG, Postfach 34, D-3509 Spangenberg (DE)**

(72) Erfinder: **Sinning, Hans-Dieter, Pfleffer Strasse 21,**
**D-3509 Spangenberg (DE)**

(84) Benannte Vertragsstaaten: **AT BE CH DE FR GB IT LI LU**
**NL SE**

(74) Vertreter: **Patentanwälte Müller-Boré, Deufel, Schön,**
**Hertel, Lewald, Otto, Isartorplatz 6,**
**D-8000 München 2 (DE)**

(54) **Steckkupplung zum Verbinden von Rohr- und/oder Schlauchleitungen.**

㊻ Die Erfindung betrifft eine Steckkupplung, bestehend aus einem Adapterstück (1), welches ein Außengewinde (26) aufweist, das in eine Rohrverbindung oder ein anderes Bauelement einschraubbar ist. In dieses Adapterstück (1) ist ein Kupplungsstecker (2) eingesetzt und mit diesem verriegelt. Dieser Kupplungsstecker (2) trägt beispielsweise an einem Ende eine Einrichtung (19) zur Aufnahme eines Schlauches (20). Dieser Kupplungsstecker (20) trägt am vorderen Ende mindestens eine elastische Rastzunge (4). Diese Rastzunge (4) hat am vorderen Ende eine konische Abschrägung (5). Wenn der Kupplungsstecker (2) in den Adapter (1) eingeschoben wird, wird infolge von Teilwirkung die konische Abschrägung nach innen gedrückt und das vordere Ende der Rastzunge kann aus der Bohrung des Adapterstückes (1) heraustreten. Dabei schnellen die Rastzungen nach außen zurück und die Verriegelungsschulter (6) tritt in einen Verriegelungseingriff mit der Stirnseite (7) des Adapterstückes ein. Am hinteren Ende ist am Verriegelungsteil (3) eine Dichtung (13) vorgesehen, die elastisch zusammengedrückt werden kann, so daß eine gute Abdichtung gegeben ist.

Zur Lösung dieser Verriegelung wird bei abgeschraubtem Adapterstück (1) mittels eines Werkzeugs auf die konische Abschrägung eingewirkt, um die vorderen Enden zusammenzudrücken und um die Rastnasen in die Bohrung des Adapterstückes zurückzudrücken.

Die Erfindung betrifft eine Steckkupplung nach dem Oberbegriff des Patentanspruches 1. Aus der DE-OS 29 48 560.7-12 ist eine steckbare Schnellkupplung für Rohr- oder Schlauchleitungen bekannt, die ein eine Aufnahmebohrung besitzendes Kupplungsgehäuse, einen in die Aufnahmebohrung einführbaren Rohrstutzen, an dessen freien Ende die anzukuppelnde Leitung befestigt ist und eine, einen geteilten, koaxial zur Aufnahmebohrung angeordneten federnd umfassende Rastvorrichtung aufweist, wobei der Federring im eingerasteten Zustand mit der Innenwand der Aufnahmebohrung der Außenwand des Rohrstutzens in einem ein axiales Herausziehen des Rohrstutzens aus dem Kupplungsgehäuse verhindernden Verriegelungseingriff steht, wobei die beiden Enden des geteilten Federrings für eine den Verriegelungseingriff lösende Betätigung durch ein Werkzeug von außen unmittelbar zugänglich angeordnet sind. Diese Kupplung weist den Nachteil auf, daß durch diesen Federring am Ende des Kupplungsgehäuses ein Spalt vorhanden ist, der die Umwelt mit der Bohrung im Kupplungsgehäuse verbindet, so daß Korrosionen innerhalb des Kupplungsgehäuses auftreten können.

Aus der US-PS 37 73 360 ist eine Steckkupplung nach dem Oberbegriff des Patentanspruchs 1 bekannt. Bei dieser bekannten Steckverbindung ist jedoch der Verriegelungskörper wiederum ein Sprengring, der mit axialem Spiel auf dem Kupplungsstecker sitzt. Dieser Sprengring weist eine konische Außenkante auf und im nicht zusammengesteckten Zustand hat diese konische Außenkante einen größeren Durchmesser als die Einschubbohrung im Kupplungsgehäuse. Wenn dieser Stecker eingesteckt wird, so gelangt diese Außenkante mit einer konischen Kante am Bohrungsende in Eingriff und der Federring wird radial nach innen zusammengedrückt. Die Bohrung im Kupplungsgehäuse weist in einiger Entfernung eine radial nach außen sich erstreckende Schulter auf und es ist von dieser Schulter ausgehend ein konischer Abschnitt vorgesehen, der der Außenkante des Federringes im ausgedehnten Zustand entspricht. Wenn dieser Federring diesen Abschnitt erreicht, dehnt er sich aus und gelangt dann mit der Schulter in einen Verriegelungseingriff. Diese Kupplung hat zwangsläufig ein axiales Spiel, denn zum Entriegeln muß der Kupplungsstecker weiter in das Kupplungsgehäuse hineingedrückt werden und dabei drückt die Konusfläche der Kupplungsgehäusebohrung den Federring wieder zusammen. Hierbei wird der Federring axial verschoben. Dieser Federring weist am hinteren Ende einen Ansatz auf und die diesen Federring aufnehmende Nut hat am hinteren oberen Rand einen Vorsprung, der dann den Ansatz des zurückgeschobenen Federringes übergreifen kann, so daß man den entriegelten Kupplungsstecker mit zusammengedrücktem Federring herausziehen kann. Nachteilig ist hierbei, daß besondere Vorkehrungen getroffen werden müssen, um eine zufällige Entriegelung durch eine ungewollte axiale Verschiebung des Steckers zu verhindern. Zu diesem Zweck ist eine besonders ausgebildete Anschlagvorrichtung vorgesehen, die ein ungewolltes Eindrücken des Kupplungssteckers in das Kupplungsgehäuse verhindert. Erst wenn diese Anschlagvorrichtung mittels eines Werkzeuges abgezogen ist, kann eine Entriegelung vorgenommen werden. Auch bei dieser Kupplung ist im verriegelten Zustand eine Verbindung zwischen der Umwelt und einem Teil der Innenbohrung des Kupplungsgehäuses vorhanden, so daß schädliche Korrosionen auftreten können.

Der Erfindung liegt die Aufgabe zugrunde, eine Steckkupplung nach dem Oberbegriff des Patentanspruches 1 derart auszubilden, daß eine axiale Verschiebung nicht auftreten kann und ein Zugang in das Innere des Adapterstückes verhindert wird.

Erfindungsgemäß wird dies dadurch gelöst, daß der Verriegelungskörper aus wenigstens einer sich vom Kupplungsteil axial erstreckenden teilzylindrischen Rastzunge besteht, deren vorderes Ende eine konische Abschrägung und eine Verriegelungsschulter aufweist, die im verriegelten Zustand gegen die der Einschubseite gegenüberliegende Stirnseite des Adapterstückes anliegt und daß eine Stirnfläche eines den Kupplungsteil umgebenden Bundes zusammen mit der einschubseitigen Stirnseite des Adapterstückes die Einschubtiefe bestimmt. Das Adapterstück kann mit einer Rohr- oder Schlauchleitung verbunden werden und diese Verbindung ist lösbar, so daß zum Entriegeln das vordere Ende der aus dem Adapterstück herausragende Rastzunge zugänglich ist. Es ist also keinesfalls eine weitere axiale Verschiebung zum Entriegeln vorhanden, wie bei der Vorrichtung nach der zitierten US-Patentschrift, bei der ja im verriegelten Zustand der Sprengring von außen nicht zugänglich ist. Außerdem wird beim Erfindungsgegenstand durch ein Zusammenwirken der Stirnfläche des Bundes am Kupplungsteil und der Stirnseite des Adapterstückes ein sicherer Abschluß gewährleistet.

Der Abstand zwischen der Verriegelungsschulter an der Rastzunge und der Stirnfläche an dem am Kupplungsteil umgebenden Bund, ist im wesentlichen gleich dem Abstand zwischen den Stirnseiten des Adapterstückes. Dabei kann die Bohrung des Adapterstückes in vorteilhafter Weise an der einschubseitigen Stirnseite eine Einsenkung aufweisen, die beim Kuppeln ein zwischen dem Kupplungsteil und dem Adapterstück angeordnetes elastisches Element aufnimmt. Hierdurch kann durch das Zusammendrücken des Elementes beim Einschieben eine gewisse Vorspannung auf den Kupplungsstecker ausgeübt werden, so daß die Verriegelungsschulter gegen die Stirnseite des Adapterstückes gedrückt wird.

Mit besonderem Vorteil kann das elastische Element ein in eine Umfangsnut des Kupplungsteils eingesetzter Dichtungsring sein. Hierdurch wird in sicherer Weise garantiert, daß von außen keine korrodierenden Medien in die Kupplung eintreten können.

Der Durchmesser der Einsenkung im Adapterstück ist im wesentlichen gleich dem Durchmesser des Bundes am Kupplungsteil. Man kann bei Verwendung gewisser Materialien das Einrasten der Rastzunge in die Verriegelungsstellung hören. Bei einigen Materialien wird dieser akkustische Effekt nicht erzielt. Es ist auch möglich, daß bei einer Montage in einer lauten Umgebung auch bei den zuerst genannten Materialien, das akkustische Signal des Einrastens nicht gehört werden kann. Durch die Ausbildung wie im Vorstehenden beschrieben wird, wird aber eine optische Anzeige für ein richtiges Einrasten gegeben, nämlich dann, wenn der Rand des Bundes am Kupplungsteil mit dem Rand der Einsenkung im Adapterstück bündig abschließt, ist die Rastzunge eingerastet.

Die Rastzunge kann am vorderen Ende zwischen den konischen Abschrägung und der Verriegelungsschulter eine teilzylindrische Umfangsfläche aufweisen, mit der dieses vordere Ende beim Einschieben in der Innenbohrung des Adapterstückes geführt werden kann. Es ist also keine scharfe Kante vorhanden, die an dieser Innenbohrung kratzen könnte.

Damit die Rastzunge eine gute Federwirkung erhält, kann sich die Dickenabmessung der Rastzunge vom Kupplungsteil aus bis zur Verriegelungsschulter vermindern.

Eine besonders vorteilhafte Ausbildung ergibt sich, wenn die Rastzunge und der Kupplungsteil einstückig ausgebildet sind.

Das Adapterstück kann einen Außengewindeabschnitt aufweisen, der zur Herstellung einer Schraubverbindung mit
einem Innengewinde an einem anderen Rohrelement verwendet wird. Dabei kann das Adapterstück einen Bundabschnitt aufweisen, der nach Art einer Mutter als Sechskant ausgebildet ist und einen größeren Durchmesser als
der des Außengewindeabschnittes aufweist.

Damit die Schraubverbindung des Adapterstückes mit einem
Rohrelement in einfachster Weise abgedichtet werden kann,
ist in der Stirnseite des Bundes, die zum Außengewindeabschnitt hinweist, eine Aufnahmenut für einen Dichtungsring ausgebildet.

Zur Herstellung einer stabilen Kupplung sind mehrere
Rastzungen symmetrisch im gleichen Abstand voneinander
am Kupplungsteil angeordnet. Beispielsweise können zwei
einander gegenüberliegende Rastzungen vorgesehen sein,
oder vier Rastzungen, deren Achsen jeweils einen Abstand
von 90° voneinander haben oder sechs Rastzungen oder
mehr und zwar in Abhängigkeit vom Durchmesser, wobei
die Umfangserstreckung der Rastzunge und der Zwischenraum zwischen den Rastzungen derart bemessen sind, daß
einmal die erforderlichen elastischen Eigenschaften
erzielt werden und daß zum anderen die Rastzungen bei
der Verriegelung ausreichend nach innen gedrückt werden
können, ohne daß ihre Ränder gegeneinander anstoßen.

Bei der Kupplung nach der zitierten US-Patentschrift
wird durch eine Keileinwirkung auf den konischen Außenrand die Entriegelung durchgeführt, das wie bereits dargelegt, eine axiale Bewegung des Kupplungssteckers erforderlich macht. Da jedoch bei abgeschraubtem Adapterstück der Kupplungsstecker von außen zugänglich ist,
kann zum Entriegeln ein spezielles Werkzeug vorgesehen sein, welches eine Bohrungskante aufweist, die gegen die konische Abschrägung in axialer Richtung einwirkt und dieses Werkzeug ein abgeändertes Druckende gegen das man mit dem Handballen drücken kann, aus. Zum Lösen der Verriegelung bei zwei und mehr Rastzungen ist es lediglich erforderlich, die Öffnungskappe dieses Öffners gegen die konischen Abschrägungen der Rastzungen zu drücken, die dadurch nach innen in eine Entriegelungsstellung gedrückt werden und in die Bohrung des Adapterstückes eingeführt werden, so daß der Kupplungsstecker leicht herausgezogen werden kann. Der Kupplungsteil kann einen zum Anschluß eines Schlauches dienenden Olivenabschnitt aufweisen. Der Kupplungsteil kann aber auch einen zylindrischen Ansatz mit Außengewinde aufweisen, wobei das Außengewinde dieses Kupplungsteils den gleichen Durchmesser hat wie das Außengewinde des Adapterstückes. Hierbei kann ein Umfangsabschnitt des Kupplungsteiles nach Art einer Mutter als Sechskant ausgebildet sein., um eine Verschraubung mittels eines Werkzeugs durchführen zu können.

Zur Lösung bestimmter Verbindungsaufgaben kann der Kupplungsteil ein L-förmiger Rohrkrümmer sein, so daß der Kupplungsstecker insgesamt eine Bohrung aufweist, die zwei senkrecht zueinander verlaufende Abschnitte hat. Der L-förmige Rohrkrümmer kann dann am anderen Ende eine Gewindebohrung aufweisen oder auch ein Außengewinde um eine Schraubverbindung mit weiteren Elementen herstellen zu können.

Der Kupplungsteil kann aber auch ein T-Stück sein, dessen Bohrungsende Innengewinde aufweisen oder dessen Bohrungsstutzen Außengewinde haben. Es handelt sich hierbei um einen Kupplungsteil, der einen Kupplungsstecker mit zwei Zuführungs- oder Ableitungsleitungen bildet. Der Kupplungsteil kann aber auch ein Kreuzstück sein, dessen Bohrungsenden Innengewinde aufweisen oder dessen andere Bohrungsstutzen Außengewinde aufweisen.

Mit dieser Steckkupplung ist es möglich, einen Bauelementensatz zu schaffen, der nur wenige Elemente umfaßt, mit dem dann Verbindungen von Rohr- und/oder Schlauchleitungen der unterschiedlichsten Art hergestellt werden können. Bisher waren zur Lösung derartiger Verbindungsaufgaben zahlreiche Elemente erforderlich. Dieser Elementensatz umfaßt einschließlich der im Vorstehenden beschriebenen Steckkupplung ein gerades Rohrstück, einen L-förmigen Rohrkrümmer, ein T-Stück und ein Kreuzstück und diese Elemente weisen Gewindebohrungsenden zur Aufnahme der Gewinde des Adapterstückes bzw. des Kupplungsteiles auf.

Ausführungsbeispiele der Erfindung sollen unter Bezugnahme auf die Figuren der Zeichnung beschrieben werden. Es zeigen:

Fig. 1      eine teilweise geschnittene Ansicht eines
            in einem Adapterstück verriegelten Kupplungsstecker,

Fig. 2      eine teilweise geschnittene Ansicht einer
            anderen Ausführungsform des Kupplungssteckers,

Fig. 3      eine teilweise geschnittene Ansicht eines
            Öffners, der zur Lösung der Verriegelung
            des Kupplungssteckers verriegelt wird,

Fig. 4      eine teilweise geschnittene  Ansicht eines
            Kupplungssteckers, bei dem der Kupplungsteil als L-förmiger Krümmer ausgebildet
            ist,

Fig. 5      eine teilweise geschnittene Ansicht einer Ausführungsform, bei dem der Kupplungsteil als T-Stück ausgebildet ist,

Fig. 6    eine Ausführungsform, bei dem der Kupplungsteil als Kreuzstück ausgebildet ist,

Fig. 7    eine Ansicht einer Kupplungsverbindung, bei der als Bauelement ein gerades Rohrstück verwendet wird,

Fig. 8    eine Ansicht einer Kupplungsverbindung, bei der als Bauelement ein L-förmiger Rohrkrümmer verwendet wird,

Fig. 9    eine Kupplungsverbindung, bei der als Bauelement ein T-Stück verwendet wird und

Fig. 10   eine Ausführungsform einer Kupplungsverbindung, bei der als Bauelement ein Kreuzstück verwendet wird.

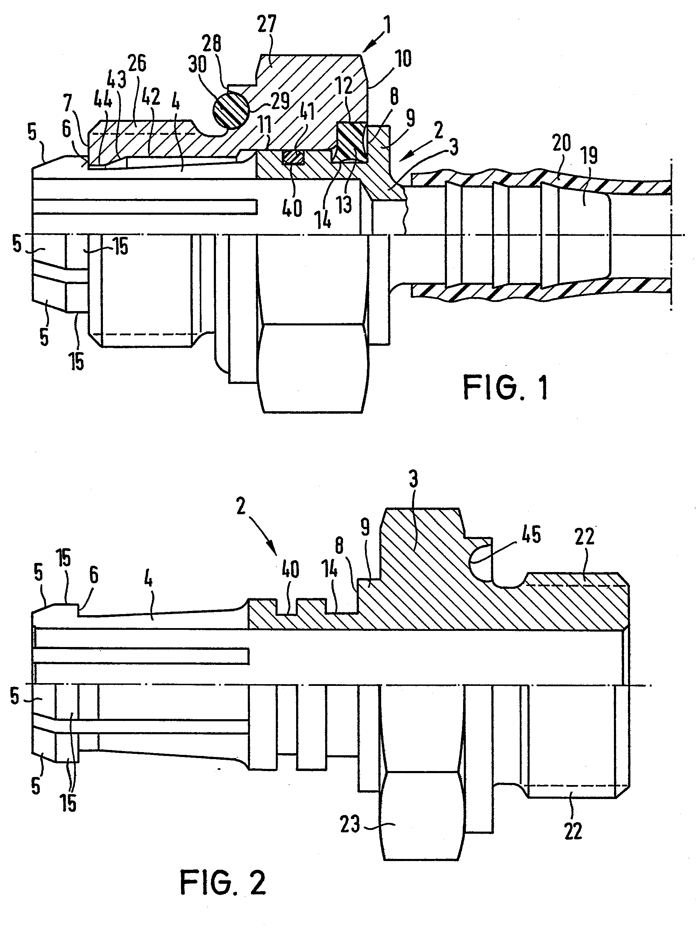

Bei der Darstellung in Fig. 1 ist in ein Adapterstück 1 ein Kupplungsstecker 2 im verriegelten Zustand angeordnet. Der Kupplungsstecker 2 weist einen Kupplungsteil 3 auf, der bei der dargestellten Ausführungsform einen Olivenabschnitt 19 hat, der zur Befestigung eines Schlauches 20 dient.

Am anderen Ende weist der Kupplungsteil 3 des Kupplungssteckers 2 Rastzungen 4 auf. Diese Rastzungen, beim dargestellten Ausführungsbeispiel kann es sich um sechs Rastzungen handeln, die symmetrisch um das vordere Ende des Kupplungsteils angeordnet sind. Diese Rastzungen bewegen sich, wie in Fig. 1 dargestellt,

0128227

vom Kupplungsteil 3 aus nach vorn.

Das vordere Ende der Rastzungen 4 weist eine konische Abschrägung auf und an diese konische Abschrägung kann sich eine teilzylindrische Umfangsfläche 15 anschließen. Am Ende dieser teilzylindrischen Umfangsfläche 15 befindet sich die radiale Verriegelungsschulter 6, die durch die Verjüngung der Rastzungen 4 gebildet wird. Diese Verjüngung dient auch dazu, die gewünschten elastischen Federungseigenschaften der Rastzungen 4 zu erzielen. Mit besonderem Vorteil können die Rastzungen 4 und der Kupplungsteil 3 einstückig ausgebildet sein.

Der Kupplungsteil 3 weist eine Ringnut 40 auf, die für eine Ringdichtung 41 zur Abdichtung der Bohrung 11 des Adapterstückes 1 dient. Wie Fig. 1 zeigt, liegt im verriegelten Zustand die Verriegelungsschulter 6 gegen die vordere Stirnseite 7 des Adapterstückes 1 an. Das Adapterstück 1 weist einen Außengewindeabschnitt 26 auf und mittels dieses Außengewindeabschnittes kann dann das Adapterstück 1 in das Innengewinde eines Rohrabschnittes eingeschraubt werden.

Der Kupplungsteil 3 weist am hinteren Ende einen Bund 9 auf. Dieser Bund 9 hat eine vordere Stirnfläche 8 und der Abstand zwischen der Verriegelungsschulter 6 der Rastnasen 4 und der Stirnfläche 8 des Bundes 9 ist gleich dem Abstand zwischen den Stirnseiten 7 und 10 des Adapterstückes, so daß die Stirnseite 10 und die Stirnfläche 8 die Einschubtiefe bestimmen und es ermöglichen, daß ein Zutritt von korrodierenden Medien in sicherer Weise verhindert werden kann.

Um eine gute und sichere Anlage der Verriegelungsschulter 6 gegen die Stirnseite 7 zu ermöglichen, kann zwischen dem Adapterstück 1 und dem Kupplungsstecker eine federnde Einrichtung vorgesehen sein und beim dargestellten Ausführungsbeispiel ist diese federnde Einrichtung eine Ringdichtung 13 und diese Ringdichtung 13 sitzt in einer Umfangsnut 14 im Adapterstück 3 und wird im eingesteckten Zustand von einer Einsenkung 12 der Bohrung 11 im Adapterstück 1 aufgenommen und zusammengepreßt. Der Durchmesser dieser Einsenkung 12 ist gleich dem Außendurchmesser des Bundes 9 am Kupplungsteil 3. Die Abmessungen sind derart, daß wenn der Rand des Bundes 9 mit dem Rand der Einsenkung 12 bündig abschließt, die Verriegelung erfolgt, d.h. die Rastnasenenden nach außen federnd zurückspringen, daß die Verriegelungsschulter 6 gegen die Stirnseite 7 des Adapterstückes 1 anliegt.

Beim Einschieben des Kupplungssteckers 2 in das Adapterstück 1 haben zunächst die teilzylindrischen Umfangsflächen 15 längs der Innenbohrung 42 des Adapterstückes 1 geführt. Diese Innenbohrung weist am vorderen Ende einen Innenkonus 43 auf und auf diesem Innenkonus laufen die konischen Abschrägungen 5 der Rastzungen 4 auf und die Rastnasen werden nach innen gedrückt, bis die teilzylindrischen Umfangsflächen 15 in Eingriff mit dem Innenbohrungsabschnitt 44 des Adapterstückes 1 gelangen , der einen kleineren Durchmesser als die Innenbohrung 42 hat. Während des letzten Schubabschnittes nähert sich unter Zusammenpressung des Dichtungsringes 13 die Kante des Bundes 9 der Außenkante der Einsenkung 12. Sobald die teilzylindrischen Umfangsflächen 15 aus dem Bohrungsabschnitt 44 austreten, schnappen die Enden der Rastzungen 4 radial nach außen in ihre Ruhestellung und dabei gelangt die Verriegelungsschulter in einen Verriegelungseingriff mit der Stirnseite 7 des Adapters ein, wobei der Verriegelungseingriff durch die elastische Wirkung des Dichtungsringes 13 sicher gewährleistet wird. Ein weiteres Einschieben ist nicht erforderlich und der zusammengepreßte Dichtungsring 13 verhindert in sicherer Weise, daß von außen Schmutz und korrodierende Medien in die Kupplungsverbindung eindringen können.

Das Adapterstück 1 weist einen Bundabschnitt 27 auf, der einen größeren Durchmesser hat als der Gewindeabschnitt 26 und beim dargestellten Ausführungsbeispiel ist dieser Bundabschnitt 27 nach Art einer Mutter als Sechskant ausgebildet, so daß ein Werkzeug zum Festschrauben aufgesetzt werden kann. Die Stirnseite 28 dieses Bundabschnittes, die zum Gewindeabschnitt 26 hinweist, hat eine Aufnahmenut 29, die zur Aufnahme eines Dichtungsringes 13 dient, wobei dieser Dichtungsring den Zweck hat, eine Verschraubung mit einem weiteren Rohrelement in sicherer Weise abzudichten.

Der Dichtungsring 13 dient auch zum axialen Längenausgleich.

In Fig. 2 ist eine andere Ausführungsform eines Kupplungssteckers 2 dargestellt, wobei gleiche Elemente mit den gleichen Bezugszeichen gekennzeichnet sind. Bei diesem weist der Kupplungsteil 3 am anderen Ende ein Außengewinde 22 auf und mit diesem Außengewinde kann dieser Kupplungsteil in ein Rohrelement eingeschraubt werden. Der Kupplungsstecker 2 kann in der gleichen Weise wie in Fig. 1 dargestellt in ein Adapterstück 1 eingeschoben in diesem verriegelt werden, wobei dann das so hergestellte Element zwei Gewindeenden, nämlich 22 und 26 hat, die den gleichen Durchmesser haben. Bei dieser Ausführungsform ist der Außenumfang des Kupplungsteiles 3 nach Art einer Mutter als Sechskant ausgebildet, damit man mittels eines Werkzeuges eine Verschraubung durchführen kann.

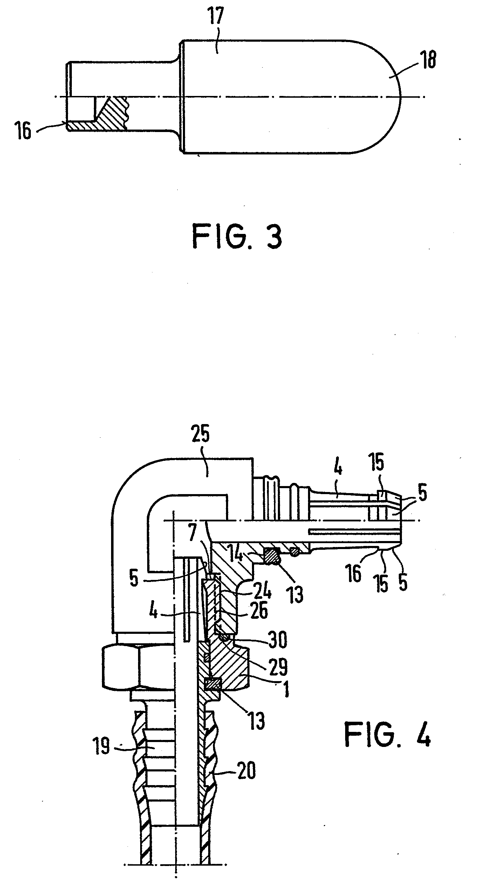

Um die in Fig. 1 dargestellte Verriegelung des Kupplungssteckers 2 im Adapterstück 1 zu lösen, ist der in Fig.3

dargestellte Öffner 17 vorgesehen. Dieser Öffner weist eine Bohrungskante 16 auf, deren Durchmesser geringer ist als der maximale Durchmesser der konischen Abschrägung 5 am vorderen Ende der Rastzunge 4. Bei abgeschraubtem Adapter 1 ist das vordere Ende der Rastzungen 4 von außen zugänglich. Es ist nur erforderlich, den Öffner 17 zu ergreifen, der ein abgerundetes Ende hat. Auf dieses abgerundete Ende 18 wird mit der Hand ein Druck ausgeübt, wobei der Öffner 17 mit seiner Bohrungskante 6 auf die konische Abschrägung 5 aufgesetzt wird. Durch Keilwirkung werden bei Ausübung eines axialen Druckes die vorderen Enden der Rastnasen 4 nach innen zusammengedrückt, bis die teilzylindrischen Umfangsflächen 15 mit dem Bohrungsabschnitt 44 im Adapter 1 verlaufen. Durch den Druck des Öffners 17 wird dann der Kupplungsstecker 2 axial nach innen verschoben und die teilzylindrischen Umfangsflächen 15 gelangen in Anlage gegen die Wand des Bohrungsabschnittes 44, die nunmehr dann herausgezogen werden.

In Fig. 4 ist eine abgeänderte Ausführungsform des Kupplungsteiles dargestellt, von dem aus sich die Rastzungen 4 erstrecken. Bei diesem Ausführungsbeispiel ist der Kupplungsteil ein L-förmiger Rohrkrümmer 25 und dies bedeutet, daß die damit herzustellende Kupplungsverbindung um 90° zueinander versetzte Rohrachsen verbinden kann.

Dieser L-förmige Rohrkrümmer 25 weist am anderen Ende eine Gewindebohrung 26 auf.

Wie in Fig. 1 dargestellt, kann dieser Kupplungsstecker mittels der Rastzungen 4 mit einem Adapterstück 1 verriegelt werden, so daß das waagerecht verlaufende Ende dieses Kupplungssteckers dann dieses Adapterstück 1 mit seinem Außengewinde 26 trägt und mit diesem Außengewinde kann eine Schraubverbindung mit einem weiteren Element hergestellt werden.

Der L-förmige Rohrkrümmer 25 weist am anderen Ende eine Gewindebohrung 24 auf und beim dargestellten Ausführungsbeispiel ist in dieser Gewindebohrung 24 die in Fig. 1 dargestellte Anordnung mittels des Außengewindeabschnittes 26 eingeschraubt. Eine Abdichtung erfolgt an dieser Stelle durch den Dichtungsring 30.

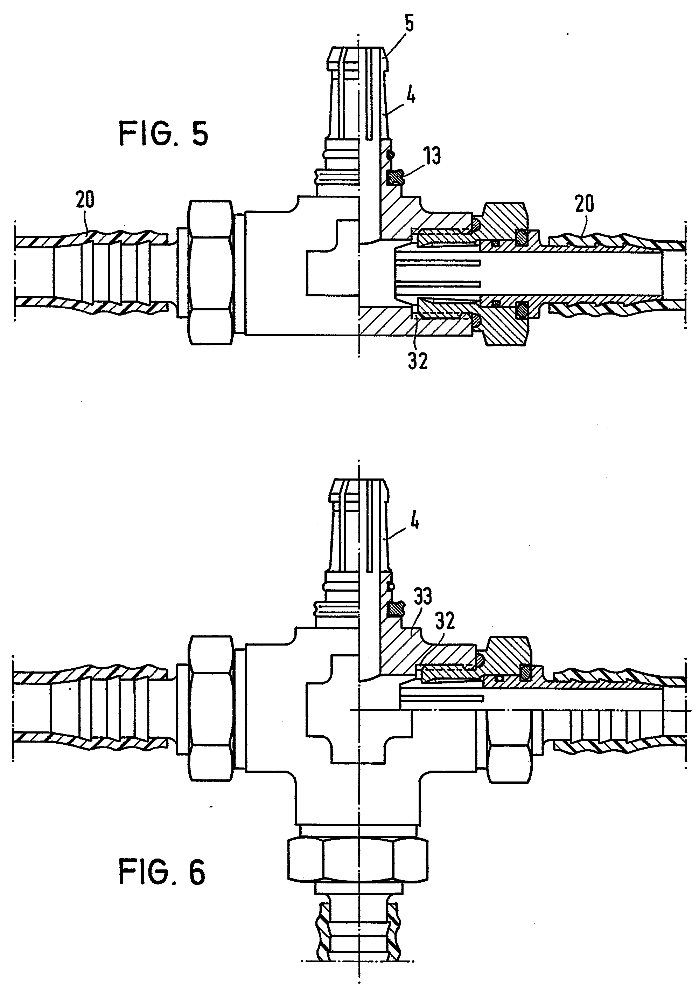

Fig. 5 zeigt eine Ausführungsform, die man als T-Kupplung bezeichnen kann. Hierbei ist der Kupplungsteil praktisch ein T-Stück. Es ist also eine durchgehende Bohrung vorgesehen und eine von dieser durchgehenden Bohrung ausgehend 90° versetzte Bohrung, wobei diese Bohrung dann die Rastzungen 4 trägt. Mittels der dargestellten Rastzungen 4 kann wiederum das in Fig. 1 dargestellte Adapterstück 1 gehalten werden.

Die Enden der Querbohrung können Innengewinde 32 aufweisen, wie dargestellt und beim dargestellten Ausführungsbeispiel sind in diese Innengewinde Anordnungen eingeschraubt, wie sie in Fig. 1 dargestellt sind. Es ist aber auch möglich, diese Gewindeenden für andere Zwecke mit Außengewinde zu versehen. Jedoch werden Innengewinde bevorzugt, um Anordnungen, wie sie in Fig. 1 bzw. in Fig. 2 dargestellt sind, zu verwenden.

Bei der Darstellung in Fig. 6 ist der Kupplungsteil als Kreuzstück 33 ausgebildet. Das heißt es sind praktisch zwei Leitungssysteme vorgesehen, deren Bohrung sich unter 90° schneiden. Auch hier kann wieder mittels der Rastnasen 4 eine Verriegelung mit einem Adapterstück, wie in Fig. 1 dargestellt, erfolgen. Die freien Bohrungsenden weisen Innengewinde 32 auf und diese Innengewinde können Anordnungen aufnehmen, wie sie in den Fig. 1 und 2 dargestellt sind.

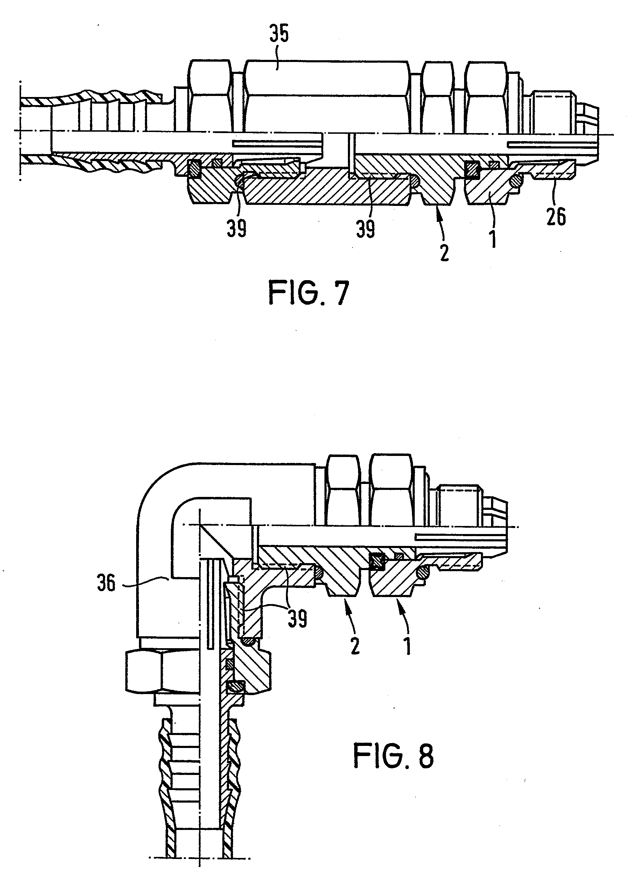

In den Fig. 7 bis 8 werden einige Möglichkeiten des Bauelementensatzes veranschaulicht, mit der unter Verwendung des erfindungsgemäßen Steckkupplung bei Vorhandensein nur weniger Elemente zahlreiche Kupplungsmöglichkeiten geschaffen werden. Bei der Darstellung in Fig. 7 ist das zusätzliche Bauelement ein gerades Rohrstück 35. Dieses gerade Rohrstück 35 weist an beiden Enden Gewindebohrungen 39 auf und in diese Gewindebohrungen kann entweder ein Adapterstück eingeschraubt werden oder das Außengewinde 22 des in Fig. 2 dargestellten Kupplungssteckers.

Bei der Darstellung in Fig. 7 ist links die Anordnung eingeschraubt, die in Fig. 1 dargestellt ist, so daß die Möglichkeit gegeben ist, einen Schlauch anzuschließen. Am rechten Ende ist in die Gewindebohrung 39 das Gewinde 22 des in Fig. 3 dargestellten Kupplungssteckers eingeschraubt. Auf diesen Kupplungsstecker ist nun das in Fig. 1 dargestellte Adapterstück 1 aufgesetzt, so daß eine weitere Verbindung mit anderen Rohrleitungen über den Außengewindeabschnitt 26 des Adapterstückes 1 erfolgen kann. Beispielsweise kann auf dieses Adapterstück 1 der in Fig. 8 dargestellte L-förmige Rohrkrümmer oder das in Fig. 7 dargestellte T-Stück oder das in Fig. 8 dargestellte Kreuzstück aufgesteckt werden und es könnten aber auch Kupplungsstecker aufgeschraubt werden, wie sie in den Fig. 4 bis 6 gezeigt sind. Von Interesse ist hierbei, daß die Verbindung zwischen dem Kupplungsstecker 2 und dem Adapterstück 1 eine drehbare Verbindung ist, so daß beispielsweise der L-förmige Rohrkrümmer 36 aufgeschraubt wird, die Ausgangsleitung in eine beliebige Richtung gedreht werden kann.

Fig. 8 zeigt als weiteres Element dieses Elementensatzes einen weiteren Rohrkrümmer 36, der wiederum Gewindebohrungsenden 39 aufweist und diese Gewindebohrungsenden 39 nehmen einmal Anordnungen auf, die in Fig. 1 darge-

0128227

stellt sind und das andere Gewindebohrungsende 39 nimmt den in Fig. 2 dargestellten Kupplungsstecker 2 auf, auf den das Adapterstück 1 aufgesetzt und mit diesem verriegelt ist. Die Funktionsweise hier ist die gleiche, wie am rechten Ende der in Fig. 7 dargestellten Ausführungsform, wobei wiederum eine Drehverbindung zwischen dem L-förmigen Rohrkrümmer 36 und dem Element geschaffen wird, welches auf das Adapterstück 1 der rechten Seite aufgeschraubt wird.

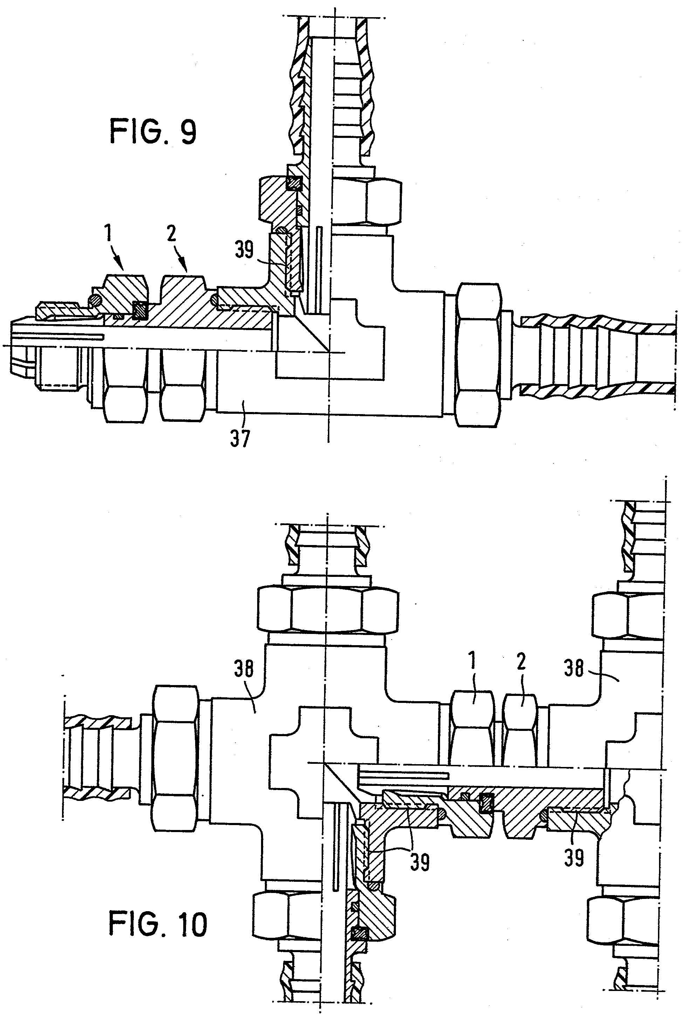

Fig. 9 zeigt als weiteres Element ein T-Stück 37, welches ebenfalls Bohrungsenden 39 aufweist. Beim dargestellten Ausführungsbeispiel sind in zwei Bohrungsenden die Anordnungen eingeschraubt, die in Fig. 1 dargestellt sind und am linken Ende ist wiederum ein Drehanschluß ausgebildet, wie er in den Fig. 7 und 8 auf der rechten Seite gezeigt ist.

In Fig. 10 ist schließlich als letztes Bauelement ein Kreuzstück 38 dargestellt und dieses Kreuzstück weist Gewindebohrungsenden 39 auf und in diese Gewindebohrungsenden können die Gewindeabschnitte 22 bzw. 26 eingeschraubt werden mit sich den daraus ergebenden Möglichkeiten.

Es ist insbesondere eine Verbindung von zwei Kreuzstücken gezeigt, wobei in das linke Kreuzstück an drei Stellen Anordnungen eingeschraubt sind, wie sie in Fig. 1 dargestellt sind. In die rechte Bohrung des linken Kreuzstückes 38 ist ein Adapterstück 1 eingeschraubt, dessen Kupplungsstecker 2 in das rechte Kreuzstück 38 eingeschraubt ist, so daß die beiden Kreuzstücke 38 in Fig. 10 gegeneinander verdrehbar sind.

**Patentanwälte · European Patent Attorneys**

Dr. Müller-Boré und Partner · POB 360720 · D-8000 München 86

**Dr. W. Müller-Boré †**

**Dr. Paul Deufel**
Dipl.-Chem., Dipl.-Wirtsch.-Ing.

**Dr. Alfred Schön**
Dipl.-Chem.

**Werner Hertel**
Dipl.-Phys.

**Dietrich Lewald**
Dipl.-Ing.

**Dr.-Ing. Dieter Otto**
Dipl.-Ing.

0128227

PATENTANWÄLTE
MÜLLER-BORÉ · DEUFEL · SCHÖN
HERTEL · LEWALD · OTTO
ISARTORPLATZ 6 - 8 MÜNCHEN 2
TEL. (089) 221483 - TX. 5-24285

H1/tl - B 1504

-8. JUNI 1983

Bell-Hermetic, Armaturenwerke GmbH & Co., KG
3509 Spangenberg

Steckkupplung zum Verbinden von Rohr- und/oder Schlauchleitungen

Patentansprüche

1. Steckkupplung zum Verbinden von Rohr- und/oder Schlauchleitungen mit einem, mit einem Gewinde versehenen Adapterstück und einem in dieses einschiebbaren und mit diesem in lösbarer Weise verriegelbaren Kupplungsstecker, der an seinem Umfang einen die Bohrung des Adapterstücks abdichtenden Dichtungsring trägt und mit einem Verriegelungskörper ausgerüstet ist, welcher mit einer konusförmigen Außenkante beim Einstecken in das Adapterstück auf eine Konusfläche in dessen Bohrung aufläuft und dadurch federnd radial nach innen gedrückt wird, und beim weiteren Einschieben hinter eine radiale Fläche nach außen in einen Verrieglungseingriff einschnappt, dadurch g e k e n n z e i c h n e t , daß der Verrieglungskörper aus wenigstens einer sich vom Kupplungsteil (3) axial erstreckenden teilzylindrischen Rastzunge (4) besteht, deren vorderes Ende eine konische Abschrägung (5) und eine Verrieglungsschulter (6) aufweist, die im verriegelten Zustand gegen die der Einschubseite gegenüberliegende Stirnseite (7) des Adapterstücks (1) anliegt und daß eine Stirnfläche (8) eines den Kupplungsteil (3) umgebenden Bunde (9) zusammen mit der einschubseitigen Stirnseite (10) des Adapterstücks (1) die Einschubtiefe bestimmt.

2. Steckkupplung nach Anspruch 1, dadurch gekennzeichnet, daß der Abstand zwischen der Verrieglungsschulter (6) an der Tastzunge (4) und der Stirnfläche (8) am dem Kupplungsteil (3) umgebenden Bund (9) im wesentlichen gleich dem Abstand zwischen den Stirnseiten (7, 10) des Adapterstücks (1) ist.

3. Steckkupplung nach Anspruch 1 oder 2, dadurch gekennzeichnet, daß die Bohrung (11) des Adapterstücks (1) an der einschubseitigen Stirnseite (10) eine Einsenkung (12) aufweist, die beim Kuppeln ein zwischen dem Kupplungsteil (3) und dem Adapterstück (1) angeordnetes elastisches Element aufnimmt, das ein in eine Umfangsnut (14) des Kupplungsteils (3) eingesetzter Dichtungsring (13) ist.

4. Steckkupplung nach Anspruch 3, dadurch gekennzeichnet, daß der Durchmesser der Einsenkung (12) im Adapterstück (1) im wesentlichen gleich dem Durchmesser des Bundes (9) am Kupplungsteil (3) ist.

5. Steckkupplung nach einem der Ansprüche 1 bis 4, dadurch gekennzeichnet, daß die Rastzunge (4) am vorderen Ende zwischen der konischen Abschrägung (5) und der Verriegelungsschulter (6) eine teilzylindrische Umfangsfläche (15) aufweist.

6. Steckkupplung nach einem der Ansprüche 1 bis 5, dadurch gekennzeichnet, daß sich die Dickenabmessung der Rastzunge (4) vom Kupplungsteil (3) aus bis zur Verriegelungsschulter (6) vermindert.

0128227

7. Steckkupplung nach einem der Ansprüche 1 bis 6, dadurch gekennzeichnet, daß die Rastzunge (4) und der Kupplungsteil (3) einstückig ausgebildet sind.

8. Steckkupplung nach einem der Ansprüche 1 bis 7, dadurch gekennzeichnet, daß das Adapterstück (1) einen Außengewindeabschnitt (26) und einen Bundabschnitt (27) aufweist, der als Sechskant ausgebildet ist und einen größeren Durchmesser als der Außengewindeabschnitt hat.

9. Steckkupplung nach Anspruch 8, dadurch gekennzeichnet, daß in der Stirnseite (28) des Bundes (27) die zum Aussengewindeabschnitt (26) hinweist, einem Aufnahmenut (29) für einen Dichtungsring (30) ausgebildet ist.

10. Steckkupplung nach einem der Ansprüche 1 bis 9, dadurch gekennzeichnet, daß mehrere Rastzungen (4) symmetrisch im gleichen Abstand voneinander am Kupplungsteil (3) angeordnet sind.

11. Steckkupplung nach einem der Ansprüche 1 bis 10, bei der eine Entriegelung des Verriegelungskörpers durch eine auf dessen konusförmige Außenkante in axialer Richtung einwirkende Bohrungskante geringeren Durchmesser des maximalen Durchmessers der konusförmigen Außenkante erfolgt, dadurch gekennzeichnet, daß diese Bohrungskante (16) in einem als Öffner (17) ausgebildeten Werkzeug angeordnet ist, der ein abgerundetes Druckende aufweist.

12. Steckkupplung nach einem der Ansprüche 1 bis 13, dadurch gekennzeichnet, daß der Kupplungsteil (3) einen zum Anschluß eines Schlauches (20) dienenden Olivenabschnitt (19) oder einen zylindrischen Ansatz (21) mit Außengewinde (22) gemeinsam mit einem als Sechskant (23) ausgebildeten Umfangsabschnitt des Kupplungsteils (3) aufweist.

13. Steckkupplung nach einem der Ansprüche 1 bis 11, dadurch gekennzeichnet, daß der Kupplungsteil ein L-förmiger Rohrkrümmer (25) ist (Fig. 4), der am anderen Ende eine Gewindebohrung (24) aufweist.

14. Steckkupplung nach einem der Ansprüche 1 bis 11, dadurch gekennzeichnet, daß der Kupplungsteil ein T-Stück (31) oder ein Kreuzstück (33) ist, dessen Bohrungsenden Innengewinde (32) aufweisen (Fig. 5).

15. Bauelementensatz zur Herstellung von Verbindungen von Rohr- und/oder Schlauchleitungen mittels der Steckkupplung nach einem der Ansprüche 1 bis 14, dadurch gekennzeichnet, daß dieser ein gerades Rohrstück (35, Fig. 7), einen L-förmigen Rohrkrümmer (36, Fig. 8), ein T-Stück (37, Fig. 9) und ein Kreuzstück (38, Fig. 9) umfaßt und daß diese Elemente (35-38) Gewindebohrungsenden (39) zur Aufnahme der Gewinde (22, 26) des Adapterstücks (1) bzw. des Kupplungsteils (3) aufweisen.

0128227

FIG. 1

FIG. 2

FIG. 3

FIG. 4

0128227

FIG. 5

FIG. 6

35

39    39    2    1    26

**FIG. 7**

36    39    2    1

**FIG. 8**

0128227

FIG. 9

1  2  39

37

FIG. 10

38  1  2  38

39  39

Europäisches
Patentamt

**EUROPÄISCHER RECHERCHENBERICHT**

0128227
Nummer der Anmeldung

EP 83 10 5555

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | FR-A-2 392 312 (OHLSSON) <br><br> * Seite 3, Zeile 21 - Seite 4, Zeile 4; Figuren * <br><br> --- | 1,5,7, 8,10, 12 | F 16 L 37/08 |
| Y | DE-A-2 850 422 (STETTNER) <br><br> * Figuren * <br><br> --- | 1-5,7, 10,13 | |
| A | DE-A-2 806 588 (VOSS) <br><br> * Figuren 2,3 * <br><br> --- | 1-5,7, 10,11, 12 | |
| A | FR-A-1 503 444 (N.V. PHILIPS' GLOEILAMPEN FABRIEKEN) <br><br> --- | | |
| A | US-A-2 465 197 (CHATHAM) <br><br> --- | | **RECHERCHIERTE SACHGEBIETE (Int. Cl. 3)** <br><br> F 16 L |
| A | FR-A-2 385 971 (WESTINGHOUSE) <br><br> ----- | | |

Der vorliegende Recherchenbericht wurde für alle Patentansprüche erstellt.

| Recherchenort <br> DEN HAAG | Abschlußdatum der Recherche <br> 27-01-1984 | Prüfer <br> HUBEAU M.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82